# EUROPEAN PATENT SPECIFICATION

(11) **EP 2 392 145 B1**
(45) Date of publication and mention of the grant of the patent: **14.10.2015**
(21) Application number: 10812920.6
(22) Date of filing: 17.12.2010
(51) Int. Cl.: H04N 19/597, H04N 13/00

(54) **METHOD FOR GENERATING, TRANSMITTING AND RECEIVING STEREOSCOPIC IMAGES, AND RELATED DEVICES**
VERFAHREN ZUM ERZEUGEN, SENDEN UND EMPFANGEN STEREOSKOPISCHER BILDER UND ENTSPRECHENDE GERÄTE
PROCÉDÉ PERMETTANT DE GÉNÉRER, DE TRANSMETTRE ET DE RECEVOIR DES IMAGES STÉRÉOSCOPIQUES, ET DISPOSITIFS ASSOCIÉS

(30) Priority: 21.12.2009 IT TO20091016
(43) Date of publication of application: 07.12.2011
(73) Proprietor: S.I.SV.EL. Societa' Italiana per lo Sviluppo dell'Elettronica S.p.A., 10060 None (TO) (IT)
(72) Inventor: CELIA, Saverio, I-10040 Rivalta Di Torino (TO) (IT); BALLOCCA, Giovanni, I-10131 Torino (IT); D'AMATO, Paolo, I-00195 Roma (IT)
(74) Representative: Dini, Roberto
(86) International application number: PCT/IB2010/055918
(87) International publication number: WO 2011/077343

(56) References cited:
- EP-A1- 1 024 672
- EP-A1- 1 501 318
- EP-A1- 1 617 684
- WO-A1-2006/137000
- WO-A1-2007/040472
- WO-A2-01/97531
- DE-A1- 19 619 598
- US-A1- 2005 041 736
- US-A1- 2008 303 895

## Description

### TECHNICAL FIELD

The present invention concerns the generation, storage, transmission, reception and reproduction of stereoscopic video streams, i.e. video streams which, when appropriately processed in a visualization device, produce sequences of images which are perceived as being three-dimensional by a viewer.

As known, the perception of three-dimensionality can be obtained by reproducing two images, one for the viewer's right eye and the other for the viewer's left eye.

A stereoscopic video stream therefore transports information about two sequences of images, corresponding to the right and left perspectives of an object or a scene.

The invention relates in particular to a method and a device for multiplexing the two images of the right and left perspectives (hereafter referred to as right image and left image) within a composite image which represents a frame of the stereoscopic video stream, hereafter also referred to as container frame.

In addition, the invention also relates to a method and a device for demultiplexing said composite image, i.e. for extracting therefrom the right and left images entered by the multiplexing device.

### PRIOR ART

In order to prevent television signal transmission and broadcasting networks (whether terrestrial or satellite ones) from suffering overloads, it is known in the art to multiplex the right and left images into a single composite image of a stereoscopic video stream.

A first example is the so-called side-by-side multiplexing, wherein the right image and the left image are undersampled horizontally and are arranged side by side in the same frame of a stereoscopic video stream.

An example of this type of multiplexing is described in EP-1501318-A1 and has the drawback that the horizontal resolution is halved while the vertical resolution is left unchanged.

Another example is the so-called top-bottom multiplexing, wherein the right image and the left image are undersampled vertically and are arranged one on top of the other in the same frame of a stereoscopic video stream.

This type of multiplexing has the drawback that the vertical resolution is halved while the horizontal resolution is left unchanged.

There are also other more sophisticated methods, such as, for example, the one disclosed in patent application WO03/088682. This application describes the use of a chessboard sampling in order to decimate the number of pixels that compose the right and left images. The pixels selected for the frames of the right and left images are compressed "geometrically" into the side-by-side format (the blanks created in column 1 by removing the respective pixels are filled with the pixels of column 2, and so on). During the decoding step for presenting the image on a screen, the frames of the right and left images are brought back to their original format, and the missing pixels are reconstructed by applying suitable interpolation techniques. This method allows the ratio between horizontal and vertical resolution to be kept constant, but it reduces the diagonal resolution and also alters the correlation among the pixels of the image by introducing high-frequency spatial spectral components which would otherwise be absent. This may reduce the efficiency of the subsequent compression step (e.g. MPEG2 or MPEG4 or H.264 compression) while also increasing the bit-rate of the compressed video stream.

Further methods for multiplexing the right and left images are known from patent application WO2008/153863.

One of these methods provides for executing a 70% scaling of the right and left images; the scaled images are then broken up into blocks of 8x8 pixels.

The blocks of each scaled image can be compacted into an area equal to approximately half the composite image.

This method has the drawback that the redistribution of the blocks modifies the spatial correlation among the blocks that compose the image by introducing high-frequency spatial spectral components, thereby reducing compression efficiency.

Moreover, the scaling operations and the segmentation of each image into a large number of blocks involve a high computational cost and therefore increase the complexity of the multiplexing and demultiplexing devices.

Another of these methods applies diagonal scaling to each right and left image, so that the original image is deformed into a parallelogram. The two parallelograms are then broken up into triangular regions, and a rectangular composite image is composed wherein the triangular regions obtained by breaking up the two parallelograms are reorganized and rearranged. The triangular regions of the right and left images are organized in a manner such that they are separated by a diagonal of the composite image.

Like the top-bottom and side-by-side solutions, this solution also suffers from the drawback of altering the ratio (balance) between horizontal and vertical resolution. In addition, the subdivision into a large number of triangular regions rearranged within the stereoscopic frame causes the subsequent compression step (e.g. MPEG2, MPEG4 or H.264), prior to transmission on the communication channel, to generate artifacts in the boundary areas between the triangular regions. Said artifacts may, for example, be produced by a motion estimation procedure carried out by a compression process according to the H.264 standard.

A further drawback of this solution concerns the computational complexity required by the operations for scaling the right and left images, and by the following operations for segmenting and rototranslating the triangular regions.

It is the object of the present invention to provide a multiplexing method and a demultiplexing method (as well as related devices) for multiplexing and demultiplexing the right and left images which allow to overcome the drawbacks of the prior art.

In particular, it is one object of the present invention to provide a multiplexing method and a demultiplexing method (and related devices) for multiplexing and demultiplexing the right and left images which allow to preserve the balance between horizontal and vertical resolution.

It is another object of the present invention to provide e multiplexing method (and a related device) for multiplexing the right and left images which allows a high compression rate to be subsequently applied while minimizing the generation of distortions or artifacts.

It is a further object of the present invention to provide a multiplexing method and a demultiplexing method (and related devices) characterised by a reduced computational cost.

These and other objects of the present invention are achieved through a multiplexing method and a demultiplexing method (and related devices) for multiplexing and demultiplexing the right and left images incorporating the features set out in the appended claims, which are intended as an integral part of the present description. US-2005/041736-A1 discloses a method for generating a stereoscopic video stream having a composite image in which the first of the two images, namely the left one, is entered unchanged, while the other image, namely the right one, is entered divided in three regions, the upper half not further divided, being entered below the first one, the lower half being further divided in two equal parts, entered one below the other aside the first image.

### BRIEF DESCRIPTION OF THE INVENTION

The general idea at the basis of the present invention is to enter two images into a composite image whose number of pixels is greater than or equal to the sum of the pixels of the two images to be multiplexed, e.g. the right image and the left image.

The pixels of the first image (e.g. the left image) are entered into the composite image without undergoing any changes, whereas the second image is subdivided into regions whose pixels are arranged in free areas of the composite image.

This solution offers the advantage that one of the two images is left unchanged, which results in better quality of the reconstructed image.

Advantageously, the second image is then broken up into the smallest possible number of regions, so as to maximize the spatial correlation among the pixels and reduce the generation of artifacts during the compression phase.

In an advantageous embodiment, the regions of the second image are entered into the composite image by means of translation or rototranslation operations only, thus leaving unchanged the ratio between horizontal and vertical resolution.

In a further embodiment, at least one of the regions into which the second image has been broken up undergoes a specular inversion operation, i.e. it is overturned relative to one axis (in particular one side) and is arranged in the composite image in a manner such that one of its sides borders on one side of the other image having identical or similar pixels on the bordering side due to the strong correlation existing between homologous pixels of the two right and left images, i.e. pixels of the two images which are positioned in the same row and column.

This solution offers the advantage of reducing the generation of artifacts in the boundary area. More advantageously, the regions into which the second image is subdivided have a rectangular shape; compared to the solution that uses triangular regions arranged with boundary areas crossing the composite image in diagonal directions, this choice provides a reduction of the artifacts produced by a subsequent compression, especially if the latter acts upon square blocks of pixels (e.g. 16x16 for the H.264 standard).

According to a particularly advantageous embodiment, the formation of artifacts is further reduced or even completely eliminated by introducing redundancy in the composite image, i.e. by copying some groups of pixels several times. In particular, this is attained by breaking up the basic image to be entered into the composite image into regions having such dimensions that the total number of pixels of these regions exceeds the number of pixels of the image to be broken up. In other words, the image is broken up into regions of which at least two comprise an image portion in common. The common image portion is a boundary area between regions adjacent to each other in the disassembled image. The size of this common portion preferably depends on the type of compression to be subsequently applied to the composite image, and may act as a buffer area which will be partially or completely removed when the disassembled image is reconstructed. Since compression may introduce artifacts in the boundary areas of said regions, by eliminating the buffer areas, or at least the outermost part thereof, it is possible to eliminate any artifacts and reconstruct an image which is faithful to the original one.

It is the particular object of the present invention a method for generating a stereoscopic video stream as described in claim 1.

A further object of the present invention is a method for reconstructing a pair of images as described in claim 13.

A still further object of the present invention is a device for generating composite images as described in claim 21.

A still further object of the present invention is a device for reconstructing a pair of images as described in claim 22.

A still further object of the present invention is a stereoscopic video stream as described in claim 23.

Further objects and advantages of the present invention will become more apparent from the following descriptions of some embodiments thereof, which are supplied by way of non-limiting example.

### BRIEF DESCRIPTION OF THE DRAWINGS

Said embodiments will be described with reference to the annexed drawings, wherein:
Fig. 1 shows a block diagram of a device for multiplexing the right image and the left image into a composite image;
Fig. 2 is a flow chart of a method executed by the device of Fig. 1;
Fig. 3 shows a first form of disassembly of an image to be entered into a composite image.
Fig. 4 shows a first phase of constructing a composite image according to one embodiment of the present invention.
Fig. 5 shows the complete composite image of Fig. 4.
Fig. 6 shows a second form of disassembly of an image to be entered into a composite image.
Fig. 7 shows a composite image that includes the image of Fig. 6.
Fig. 8 shows a third form of disassembly of an image to be entered into a composite image.
Fig. 9 shows a composite image that includes the image of Fig. 8.
Fig. 10 shows a block diagram of a receiver for receiving a composite image generated according to the method of the present invention.
Fig. 11 shows some phases of reconstructing the image disassembled according to the method of Fig. 8 and entered into the composite image received by the receiver of Fig. 10.
Fig. 12 is a flow chart of a method for reconstructing the right and left images multiplexed into a composite image of the type shown in Fig. 9.
Fig. 13 shows a composite image according to a fourth embodiment of the present invention.
Figs. 14a to 14f show a right image and a left image in different processing phases carried out for entering them into the composite image of Fig. 13.

Where appropriate, similar structures, components, materials and/or elements are designated by means of similar references.

### DETAILED DESCRIPTION OF THE INVENTION

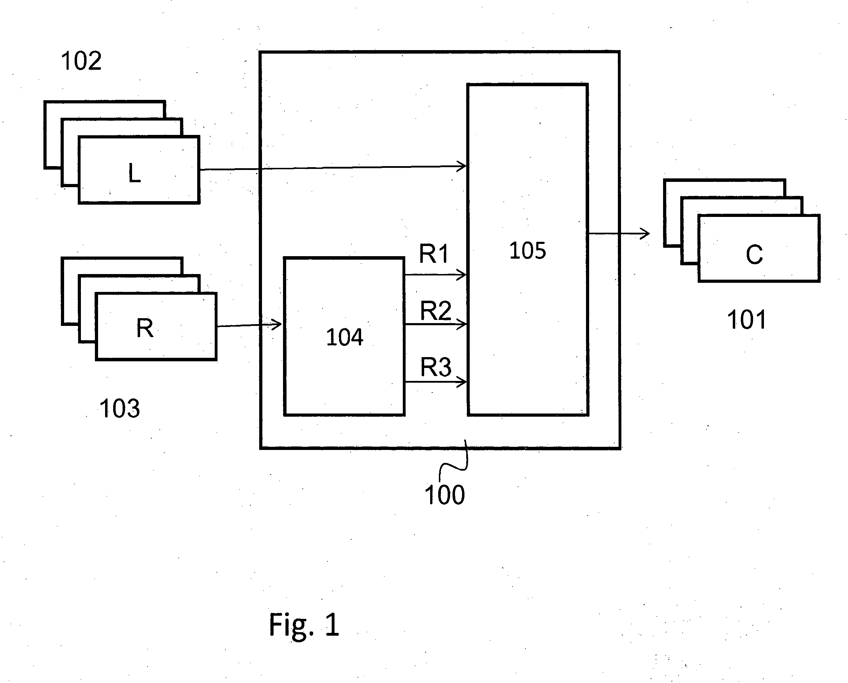

Fig. 1 shows the block diagram of a device 100 for generating a stereoscopic video stream 101.

In Fig. 1 the device 100 receives two sequences of images 102 and 103, e.g. two video streams, intended for the left eye (L) and for the right eye (R), respectively.

The device 100 allows to implement a method for multiplexing two images of the two sequences 102 and 103.

In order to implement the method for multiplexing the right and left images, the device 100 comprises a disassembler module 104 for breaking up an input image (the right image in the example of Fig. 1) into a plurality of subimages, each corresponding to one region of the received image, and an assembler module 105 capable of entering the pixels of received images into a single composite image to be provided at its output.

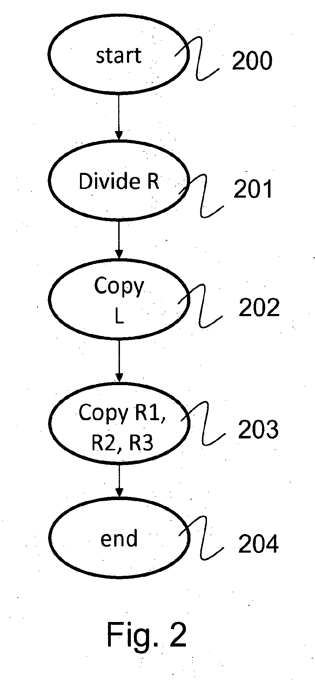

One example of a multiplexing method implemented by the device 100 will now be described with reference to Fig. 2.

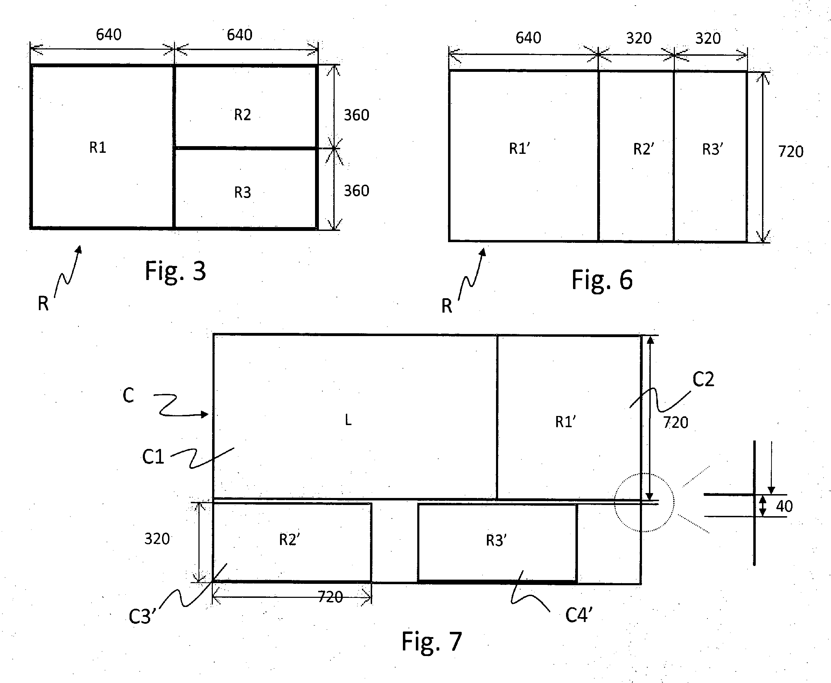

The method starts in step 200. Subsequently (step 201), one of the two input images (right or left) is broken up into a plurality of regions, as shown in Fig. 3. In the example of Fig. 3, the disassembled image is a frame R of a video stream 720p, i.e. a progressive format with a resolution of 1280 x 720 pixels, 25/30 fps (frames per second).

The frame R of Fig. 3 comes from the video stream 103 which carries the images intended for the right eye, and is disassembled into three regions R1, R2 and R3.

The disassembly of the image R is obtained by dividing it into two portions of the same size and subsequently subdividing one of these portions into two portions of the same size.

The region R1 has a size of 640x720 pixels and is obtained by taking all the first 640 pixels of each row. The region R2 has a size of 640x360 pixels and is obtained by taking the pixels from 641 to 1280 of the first 360 rows. The region R3 has a size of 640x360 pixels and is obtained by taking the remaining pixels of the image R, i.e. the pixels from 641 to 1280 of the last 360 rows.

In the example of Fig. 1, the operation of disassembling the image R is carried out by the module 104, which receives an input image R (in this case the frame R) and outputs three subimages (i.e. three groups of pixels) corresponding to the three regions R1, R2 and R3. Subsequently (steps 202 and 203) the composite image C is constructed, which comprises the information pertaining to both the right and the left input images; in the example described herein, said composite image C is a frame of the output stereoscopic video stream, and therefore it is also referred to as container frame.

First of all (step 202), the input image received by the device 100 and not disassembled by the device 105 (the left image L in the example of Fig. 1) is entered unchanged into a container frame which is sized in a manner such as to include all the pixels of both input images. For example, if the input images have a size of 1280x720 pixels, then a container frame suitable for containing both will be a frame of 1920x1080 pixels, e.g. a frame of a video stream of the 1080p type (progressive format with 1920 x 1080 pixels, 25/30 frames per second).

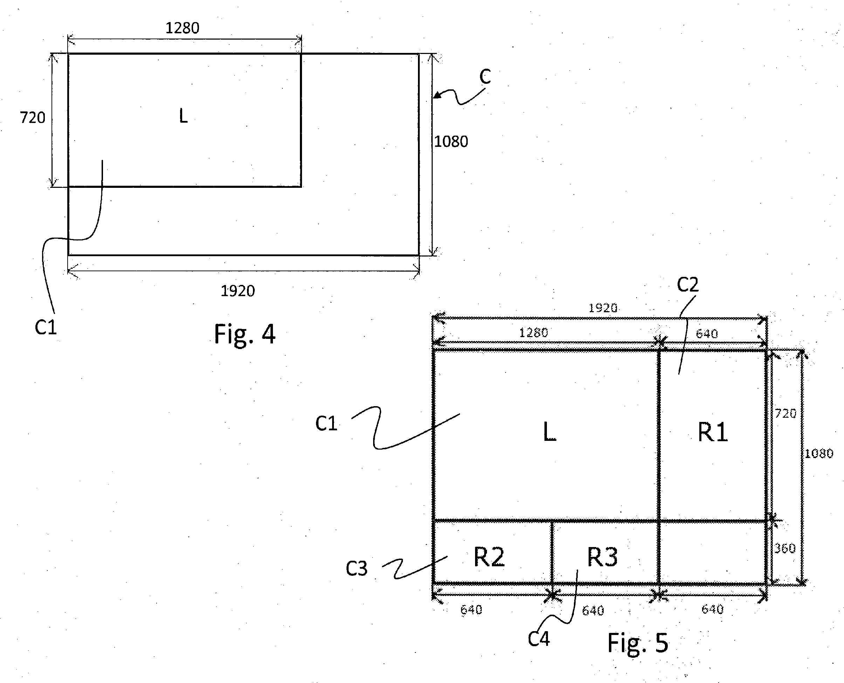

In the example of Fig. 4, the left image L is entered into the container frame C and positioned in the upper left corner. This is obtained by copying the 1280x720 pixels of the image L into an area C1 consisting of the first 1280 pixels of the first 720 rows of the container frame C.

When in the following description reference is made to entering an image into a frame, or transferring or copying pixels from one frame to another, it is understood that this means to execute a procedure which generates (by using hardware and/or software means) a new frame comprising the same pixels as the source image.

The (software and/or hardware) techniques for reproducing a source image (or a group of pixels of a source image) into a target image are considered to be unimportant for the purposes of the present invention and will not be discussed herein any further, in that they are per se known to those skilled in the art.

In the next step 203, the image disassembled in step 201 by the module 104 is entered into the container frame. This is achieved by the module 105 by copying the pixels of the disassembled image into the container frame C in the areas thereof which were not occupied by the image L, i.e. areas being external to the area C1.

In order to attain the best possible compression and reduce the generation of artifacts when decompressing the video stream, the pixels of the subimages outputted by the module 104 are copied by preserving the respective spatial relations. In other words, the regions R1, R2 and R3 are copied into respective areas of the frame C without undergoing any deformation, exclusively by means of translation and/or rotation operations.

An example of the container frame C outputted by the module 105 is shown in Fig. 5. The region R1 is copied into the last 640 pixels of the first 720 rows (area C2), i.e. next to the previously copied image L.

The regions R2 and R3 are copied under the area C1, i.e. respectively in the areas C3 and C4, which respectively comprise the first 640 pixels and the following 640 pixels of the last 360 rows.

As a preferred alternative to the solution shown in Fig. 5, the regions R2 and R3 may be copied into the container frame C in disjoined areas (i.e. neither overlapping nor neighbouring) separated by a group of pixels, so as to reduce the boundary regions.

The operations for entering the images L and R into the container frame do not imply any alterations to the balance between horizontal and vertical resolution.

In one embodiment, the same RGB values are assigned to the remaining pixels of the frame C; for example, said remaining pixels may be all black.

In a further embodiment, the space left available in the composite image may be used for entering any type of signal necessary for reconstructing the right and left images at demultiplexer level, e.g. indicating how the composite image was formed.

In this embodiment, a region of the container frame not occupied by the right or left images or by part thereof is used for receiving the signal. The pixels of this signal region are, for example, coloured in two colours (e.g. black and white) so as to create a bar code of any kind, e.g. linear or two-dimensional, which carries the signal information.

Once the transfer of both input images (and possibly also of the signal) into the container frame has been completed, the method implemented by the device 100 ends and the container frame can be compressed and transmitted on a communication channel and/or recorded onto a suitable medium (e.g. CD, DVD, Blu-ray, mass memory, etc.).

Since the multiplexing operations explained above do not alter the spatial relations among the pixels of one region or image, the video stream outputted by the device 100 can be compressed to a considerable extent while preserving good possibilities that the image will be reconstructed very faithfully to the transmitted one without creating significant artifacts. Before describing further embodiments, it must be pointed out that the division of the frame R into three regions R1, R2 and R3 corresponds to the division of the frame into the smallest possible number of regions, taking into account the space available in the composite image and the space occupied by the left image entered unchanged into the container frame.

Said smallest number is, in other words, the minimum number of regions necessary to occupy the space left available in the container frame C by the left image.

In general, therefore, the minimum number of regions into which the image must be disassembled is defined as a function of the format of the source images (right and left images) and of the target composite image (container frame C).

Preferably, the image to be entered into the frame is disassembled by taking into account the need for breaking up the image (e.g. R in the above example) into the smallest number of rectangular regions.

In a further embodiment, the right image R is disassembled as shown in Fig. 6.

The region R1' corresponds to the region R1 of Fig. 3, and therefore comprises the first 640 pixels of all 720 rows of the image.

The region R2' comprises the 320 columns of pixels adjacent to the region R1', whereas the region R3' comprises the last 320 columns of pixels.

The container frame C can thus be constructed as shown in Fig. 7, with the regions R2' and R3' turned by 90° to be arranged in the areas C3' and C4' under the image L and the region R1'.

The regions R2' and R3' thus rotated occupy 720 pixels of 320 rows; therefore, the areas C3' and C4' are separated from the areas C1 and C2 that contain the pixels copied from the image L and from the region R1'.

Preferably, the areas C3' and C4' are separated from the other areas C1 and C2 by at least one safeguard line. In particular, it is advantageous and preferred to copy the pixels of the regions R2' and R3' into the last rows of the container frame C.

Since in this case the container frame is made up of 1080 rows, in the embodiment of Fig. 7 the rotated regions R2' and R3' are separated from the above image L and region R1' by a safeguard strip 40 pixels high.

In the example of Fig. 7, the regions R2' and R3' are separated from each other, so that they are surrounded by pixels of a predefined colour (e.g. white or black) not coming from the right and left images. In this manner, the boundary areas between regions containing pixels coming from the right and left images are reduced, while also reducing any artifacts caused by image compression and maximizing the compression rate.

As an alternative to positioning R2' and R3' into the last rows of the container frame C (as described with reference to Fig. 7), in a preferred embodiment R2' and R3' are positioned in a manner such that a safeguard strip 32 pixel rows high is left between the bottom edge of L and the upper edge of R2' and R3'. This provides a second safeguard strip 8 pixel rows high between the bottom edge of R2' and R3' and the bottom edge of C. By further exploiting the width of the container frame, it is possible to position R2' and R3' in a manner such that they get completely surrounded by pixels coming from neither the right image nor the left image.

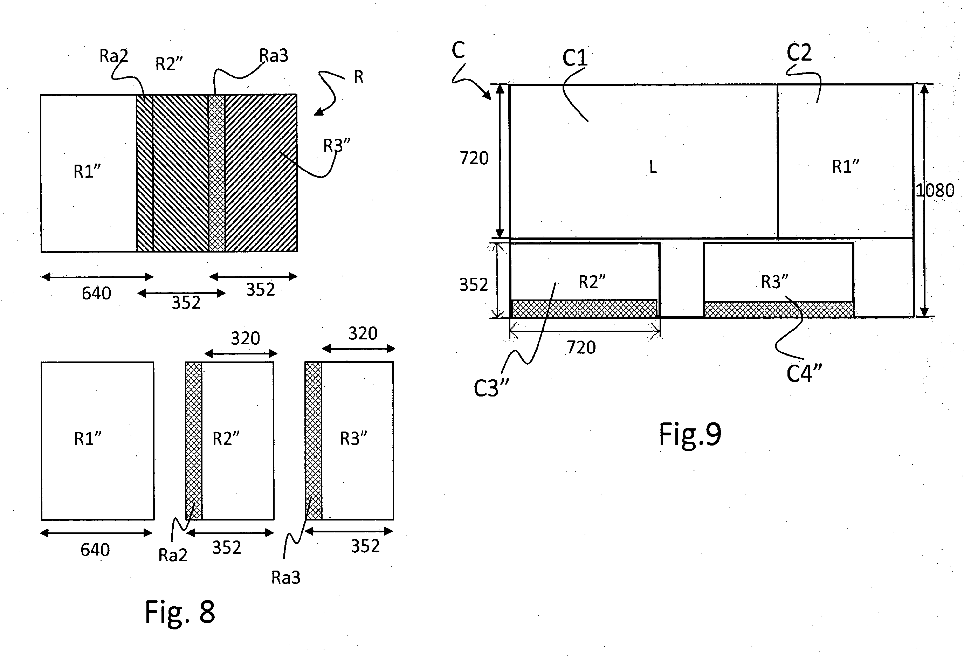

In a further embodiment, which is described herein with reference to Figs. 8 and 9, the module 104 extracts three subimages R1", R2" and R3" whose total sum of pixels exceeds that of the disassembled image.

The region R1" corresponds to the region R1' of Fig. 6, whereas R2" and R3" include the area of the regions R2' and R3' plus an additional area (Ra2 and Ra3) which allows to minimize the creation of artifacts during the image compression phase.

The segment R1" is thus a region having a size of 640 x 720 pixels and occupying the first columns of the frame R to be disassembled.

The segment R3" occupies the last columns of the frame R to be disassembled, and borders on the central region R2". R3" includes, on the left side (the one bordering on R2"), a buffer strip Ra3 containing pixels in common with the region R2". In other words, the last columns of R2" and the first ones of R3" (which constitute the buffer strip Ra3) coincide. Preferably, the size of the buffer strip Ra3 is chosen as a function of the type of compression to be subsequently applied to the container frame C, and in general to the video stream containing it. In particular, said strip has a size which is twice that of the elementary processing unit used in the compression process. For example, the H.264 standard provides for disassembling the image into macroblocks of 16x16 pixels, each of which represents this standard's elementary processing unit. Based on this assumption, the strip Ra3 has a width of 32 pixels. The segment R3" therefore has a size of 352 (320+32)x720 pixels, and comprises the pixels of the last 352 columns of the image R. The segment R2" occupies the central part of the image R to be disassembled and includes, on its left side, a buffer strip Ra2 having the same size as the strip Ra3. In the example taking into account the H.264 compression standard, the strip Ra2 is thus 32 pixels wide and comprises pixels in common with the region R1". The segment R2" therefore has a size of 352x720 pixels and comprises the pixels of the columns from 608 (640 of R1"-32) to 978 of the frame R.

The three subimages pertaining to the regions R1", R2" and R3" outputted by the module 104 (visible in Fig. 8) are then entered into the container frame C as shown in Fig. 9. The regions R2" and R3" are turned by 90° and the pixels are copied into the last rows of the frame C (areas designated C3" and C4") by providing a certain number of safeguard pixels which separate the areas C3" and C4" from the areas C1 and C2 that include the pixels of the images L and R1". In the case shown in Fig. 9, this safeguard strip is 8 pixels wide. The frame C thus obtained is subsequently compressed and transmitted or saved to a storage medium (e.g. a DVD). For this purpose, compression means are provided which are adapted to compress an image or a video signal, along with means for recording and/or transmitting the compressed image or video signal.

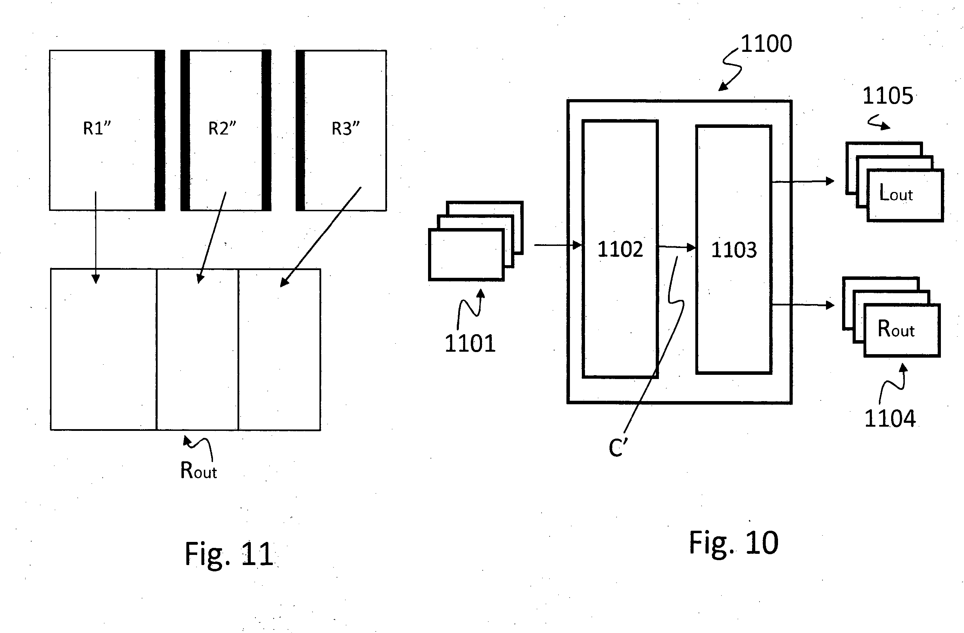

Fig. 10 shows a block diagram of a receiver 1100 which decompresses the received container frame (if compressed), reconstructs the two right and left images, and makes them available to a visualization device (e.g. a television set) allowing fruition of 3D contents. The receiver 1100 may be a set-top-box or a receiver built in a television set.

The same remarks made for the receiver 1100 are also applicable to a reader (e.g. a DVD reader) which reads a container frame (possibly compressed) and processes it in order to obtain one pair of frames corresponding to the right and left images entered into the container frame (possibly compressed) read by the reader.

Referring back to Fig. 10, the receiver receives (via cable or antenna) a compressed stereoscopic video stream 1101 and decompresses it by means of a decompression module 1102, thereby obtaining a video stream comprising a sequence of frames C' corresponding to the frames C. If there is an ideal channel or if container frames are being read from a mass memory or a data medium (Blu-ray, CD, DVD), the frames C' correspond to the container frames C carrying the information about the right and left images, except for any artifacts introduced by the compression process.

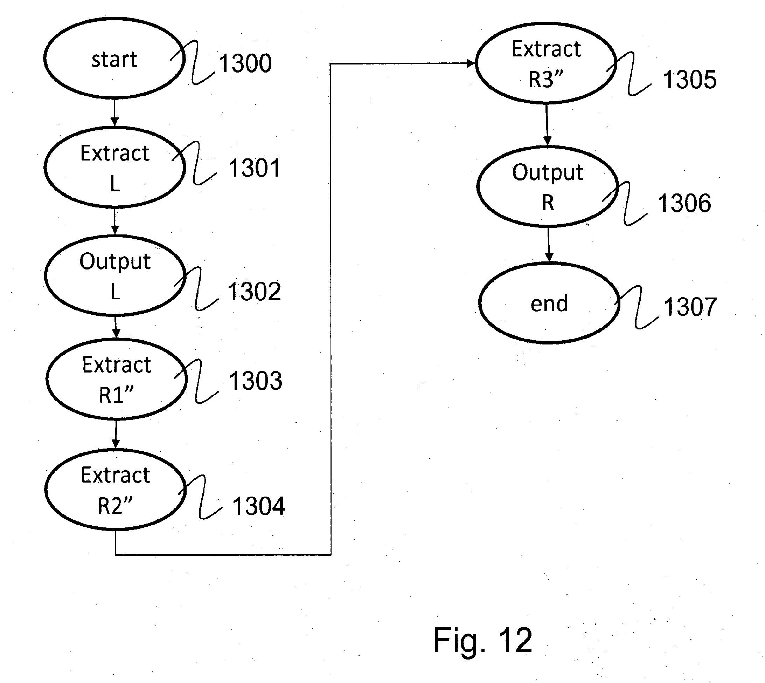

These frames C' are then supplied to a reconstruction module 1103, which executes an image reconstruction method as described below with reference to Figs. 11 and 12.

It is apparent that, if the video stream was not compressed, the decompression module 1102 may be omitted and the video signal may be supplied directly to the reconstruction module 1103.

The reconstruction process starts in step 1300, when the decompressed container frame C' is received. The reconstruction module 1103 extracts (step 1301) the left image L by copying the first 720x1280 pixels of the decompressed frame into a new frame which is smaller than the container frame, e.g. a frame of a 720p stream. The image L thus reconstructed is outputted to the receiver 1100 (step 1302).

Subsequently, the method provides for extracting the right image R from the container frame C'.

The phase of extracting the right image begins by copying (step 1303) a portion of the area R1" included in the frame C'. More in detail, the pixels of the first 624(640-16) columns of R1" are copied into the corresponding first 624 columns of the new frame representing the reconstructed image Rout, as shown in Fig. 11. As a matter of fact, this removes from the reconstruction phase the 16 columns of R1" which are most subject to creation of artifacts, e.g. through the effect of the motion estimation procedure carried out by the H.264 compression standard.

Then a central portion of R2" is extracted (step 1304). From the decompressed frame C' (which, as aforesaid, corresponds to the frame C of Fig. 9), the pixels of the area C3" (corresponding to the source region R2") are selected and a 90° rotation inverse to the one executed in the multiplexer 100 is made, which brings them back to the original row/column condition, i.e. the one shown in Fig. 8. At this point, the first and last sixteen (16) columns of R2" are eliminated and the remaining 352-32=320 pixel columns are copied into the free columns adjacent to those just copied from R1".

By cutting the 16 outermost columns of the region R2", those columns are eliminated where formation of artifacts is most likely to occur. The width of the cut area (in this case 16 columns) depends on the type of compression used. Said area is preferably equal to the elementary processing unit used by the compression process; in the case described herein, the H.264 standard operates upon blocks of 16x16 pixels, and therefore 16 columns are to be cut.

As regards R3" (step 1305), the pixels of the region C4" are extracted from the frame C' and the subimage R3" is brought back to the original row/column format (see Fig. 8). Subsequently, the first 16 pixel columns are eliminated (corresponding to half the area Ra3) and the remaining 352-16=336 pixel columns are copied into the last free columns on the left of the reconstructed frame. Like R2", also in R3" the cut area is equal to the elementary processing unit used by the compression process.

Of course, for both regions R2" and R3" the rotation operation may be carried out in a virtual manner, i.e. the same result in terms of extraction of the pixels of interest may be obtained by copying into the reconstructed frame the pixels of a row of the area C3" (if R2", C4" if R3") in a column of the new frame Rout, except for the last 16 rows of the area C3" (if R2", C4" if R3") corresponding to the sixteen columns to be cut, shown in Fig. 8. At this point, the right image Rout has been fully reconstructed and can be outputted (step 1306).

The process for reconstructing the right and left images contained in the container frame C' is thus completed (step 1307). Said process is repeated for each frame of the video stream received by the receiver 1100, so that the output will consist of two video streams 1104 and 1105 for the right image and for the left image, respectively.

The process for reconstructing the right and left images described above with reference to Figs. 10, 11 and 12 is based upon the assumption that the demultiplexer 1100 knows how the container frame C was built and can thus extract the right and left images.

Of course, this is possible if the multiplexing method is standardized. In order to take into account the fact that the container frame may be generated in any one of the above-described methods, or anyway according to any one of the methods that utilize the solution which is the subject of the appended claims, the demultiplexer uses signalling information contained in a predefined region of the composite image (e.g. a bar code, as previously described) in order to know how the contents of the composite image must be unpacked and how to reconstruct the right and left images.

After decoding said signal, the demultiplexer will know the position of the unchanged image (e.g. the left image in the above-described examples), as well as the positions and any transformations (rotation, translation or the like) of the regions into which the other image was disassembled (e.g. the right image in the above-described examples).

With this information, the demultiplexer can thus extract the unchanged image (e.g. the left image) and reconstruct the disassembled image (e.g. the right image).

Although the present invention has been illustrated so far with reference to some preferred and advantageous embodiments, it is clear that it is not limited to said embodiments and that many changes may be made thereto by a man skilled in the art wanting to combine into a composite image two images relating to two different perspectives (right and left) of an object or a scene.

For example, the electronic modules that provide the above-described devices, in particular the device 100 and the receiver 1100, may be variously subdivided and distributed; furthermore, they may be provided in the form of hardware modules or as software algorithms implemented by a processor, in particular a video processor equipped with suitable memory areas for temporarily storing the input frames received. These modules may therefore execute in parallel or in series one or more of the video processing steps of the image multiplexing and demultiplexing methods according to the present invention.

It is also apparent that, although the preferred embodiments refer to multiplexing two 720p video streams into one 1080p video stream, other formats may be used as well.

The invention is also not limited to a particular type of arrangement of the composite image, since different solutions for generating the composite image may have specific advantages.

For example, the embodiments described above with reference to Figs. 1 to 12 offer the advantage that they only carry out translation or rototranslation operations, thus only requiring little computational power.

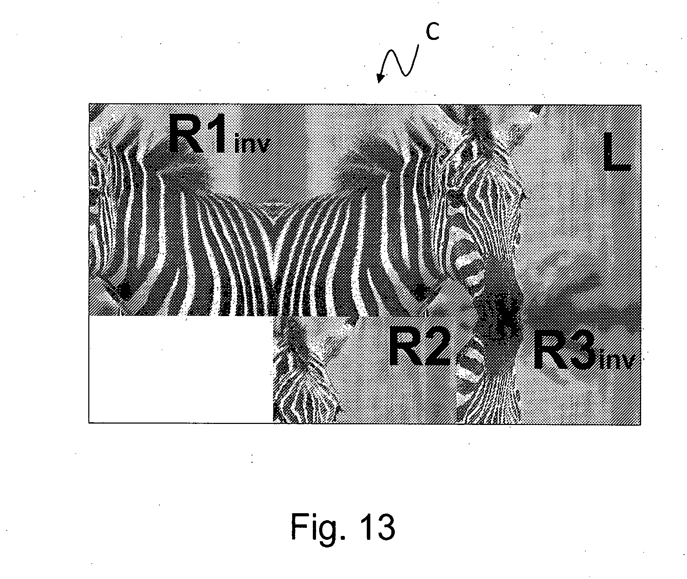

Alternatively, it is conceivable that the images are also subjected to specular inversion operations, in addition to said rotation and/or translation operations, in order to obtain a composite image of the type shown in Fig. 13.

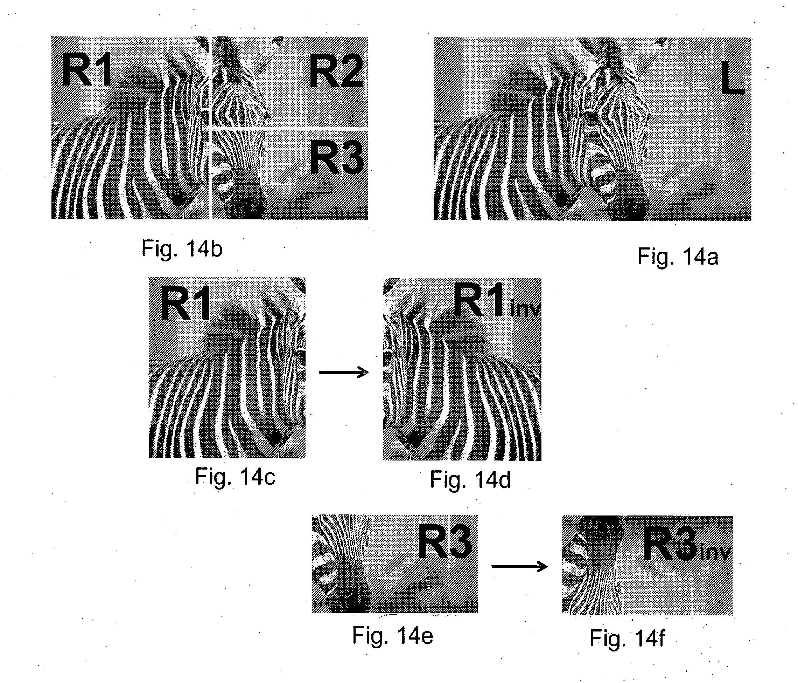

These additional operations are carried out for the purpose of maximizing the boundary perimeters between regions containing homologous pixels, thereby exploiting the strong correlation existing among them and minimizing the artifacts introduced by the subsequent compression. In the example of Figs. 13 and 14 it has been assumed for clarity that the two right and left images are identical, even though they generally differ slightly.

In this figure, the left image L (shown in Fig. 14a) is positioned in the upper right corner of the container frame C, so as to occupy the last 1280 pixels of the first 720 rows. As in the examples previously described, the image L is thus copied unchanged into the container frame C.

Instead, the right image R is disassembled according to the example of Fig. 3; Fig. 14b shows the image R broken up into three regions R1, R2 and R3.

Subsequently, some regions (the regions R1 and R3 in the example of Fig. 14) undergo a specular inversion operation; the inversion may occur relative to a vertical axis (i.e. parallel to a column of the image) or to a horizontal axis (i.e. parallel to a row of the image).

In the case of inversion relative to a vertical axis, the pixels of the column N (where N is an integer between 1 and 1080, 1080 being the number of columns of the image) are copied into the column 1080+1-N.

In the case of inversion relative to a horizontal axis, the pixels of the row M (where M is an integer between 1 and 720, 720 being the number of rows of the image) are copied into the row 720+1-N.

Figs. 14c and 14d show the region R1 extracted from the image R and inverted (R1rot) relative to a vertical axis, in particular relative to a vertical side.

The inverted region R1inv is entered into the first 640 pixels of the first 640 pixel rows. As can be seen in the example of Fig. 13, when R1inv is entered rotated into the container frame C, the pixels of R1inv bordering on L are very similar to the pixels of L bordering on R1inv. The spatial correlation among these pixels has the advantage of reducing the formation of artifacts.

Figs. 14e and 14f show the region R3 extracted from the image R of Fig. 14b and then inverted (R3inv) relative to a horizontal axis, in particular relative to a horizontal side.

The region R3inv is entered into the last 640 pixels of the last 360 rows. This reduces the generation of artifacts, since the pixels of the boundary regions between R3inv and L are pixels having high spatial correlation. The pixels in this boundary region, in fact, reproduce similar or identical portions of the image.

The container frame C is then completed by entering the region R2.

In this example R2 is not inverted and/or rotated because it would not be possible, in neither case, to match a boundary region of R2 with a boundary region made up of homologous pixels of another region of R or L.

Finally, it is also apparent that the invention relates to any demultiplexing method which allows a right image and a left image to be extracted from a composite image by reversing one of the above-described multiplexing processes falling within the protection scope of the present invention.

The invention therefore also relates to a method for generating a pair of images starting from a composite image, which comprises the steps of:
- generating a first one (e.g. the left image) of said right and left images by copying one single group of contiguous pixels from a region of said composite image,
- generating a second image (e.g. the right image) by copying other groups of contiguous pixels from different regions of said composite image.

According to one embodiment, the information for generating said second image is extracted from an area of said composite image. Said information is preferably encoded according to a bar code.

In one embodiment of the method for generating the right and left images, the generation of the image which was disassembled in the composite image comprises at least one phase of specular inversion of a group of pixels of one of said different regions.

In one embodiment of the method for generating the right and left images, the generation of the image which was disassembled in the composite image comprises at least one phase of removing pixels from one of the regions of the composite image that comprise the pixels of this image to be reconstructed. In particular, the pixels are removed from a boundary area of this region.

In one embodiment, the image which was disassembled into different regions of the composite image is reconstructed by subjecting the pixel regions that include the pixels of the image to be reconstructed to translation and/or rotation operations only.

## Claims

1. A method for generating a stereoscopic video stream (101) comprising composite images (C), said composite images (C) comprising information about a right image (R) and
a left image (L), wherein
pixels of said right image (R) and pixels of said left image (L) are selected, and
said selected pixels are entered into a composite image (C) of said stereoscopic video stream,
all the pixels of said right image (R) and all the pixels of said left image (L) are entered into said composite image (C) by leaving one of said two images unchanged and breaking up the other one into regions (R1, R2, R3) having a rectangular shape and comprising a plurality of pixels and entering said regions into said composite image (C) in areas of said composite image (C) not occupied by said unchanged image, the ratio between horizontal and vertical resolution of said left and right images being unchanged, said composite image (C) being a frame of said stereoscopic video stream having a number of pixels equal to or greater than the sum of the pixels of said left and right images,
the method being **characterized in that**, in order to reduce, in the boundary area of said regions, the generation of artifacts due to the image compression, said regions are obtained through the steps of:
- dividing vertically said other image (R) into two equally sized portions;
- dividing horizontally one of said two equally sized portions into two further equally sized portions (R2, R3), the other (R1) of said two equally sized portions being not further divided.

2. A method according to claim 1, wherein said other of the two equally sized portions of the other image (R) not further divided (R1) is placed into said composite image (C) aside the unchanged image (L), and wherein said two further equally sized portions (R2, R3) of the other image (R) are placed into said composite image (C) below the unchanged image (L), the one aside the other.

3. A method according to any one of the preceding claims, wherein said regions (R1, R2, R3) are entered into said composite image by means of translation operations only.

4. A method according to claims 1 or 2, wherein said regions (R1, R2, R3) are entered into said composite image (C) by means of translation and/or rotation operations.

5. A method according to any one of the preceding claims, wherein at least one portion of the space remained free in the composite image is used for entering a signal necessary for reconstructing the right and left images at demultiplexer level.

6. A method according to any one of the preceding claims, wherein, before entering one of said regions into said composite image, a specular inversion operation is carried out along one side of said one region.

7. A method according to claim 6, wherein said one region is entered into said composite image with one side bordering on one side of another image or region, so that pixels relating to a same spatial area are arranged side by side.

8. A method according to any one of the preceding claims, wherein said regions have a rectangular shape.

9. A method according to any one of the preceding claims, wherein said regions comprise contiguous groups of columns of pixels of said image.

10. A method according to any one of the preceding claims, wherein at least two of said regions have at least one pixel group in common, said pixel group being arranged in a boundary area between said at least two of said regions.

11. A method according to any one of the preceding claims, wherein at least one of said regions that is entered into said composite image is separated from other regions of the composite image that comprise pixels copied from said right image or said left image.

12. A method according to any one of the preceding claims, wherein
a sequence of right images and a sequence of left images are received,
a sequence of composite images is generated by starting from said sequences of right and left images,
said sequence of composite images is compressed.

13. A method for reconstructing a pair of images by starting from a composite image according to any one of the preceding claims, comprising the steps of:
- generating a first one of said right (R) and left (L) images by copying one single group of contiguous pixels from a region of said composite image,
- generating a second image of said right (R) and left (L) images by copying other groups of contiguous pixels from different regions (R1, R2, R3) of said composite image, having one of said different regions (R1) the same vertical size as said first image (L) and being the others of said different regions (R2, R3) placed one over the other beside said one of said different regions (R1) in said second image.

14. A method according to claim 13, wherein the information for generating said pair of images is extracted from an area of said composite image.

15. A method according to claim 14, wherein said information is encoded according to a bar code.

16. A method according to claim 13 or 15, wherein the generation of said second image comprises at least one phase of specular inversion of a group of pixels of at least one of said different regions.

17. A method according to any one of claims 13 to 16, wherein the generation of said second image comprises at least one phase of removing pixels from at least one of said regions.

18. A method according to claim 17, wherein the pixels are removed from a boundary area of said at least one region.

19. A method according to any one of claims 13 to 18, wherein said second image is generated by subjecting said pixel regions to translation operations only.

20. A method according to any one of claims 13 to 19, wherein said second image is generated by subjecting said pixel regions to rotation and/or translation operations.

21. A device (100) for generating composite images (C), comprising means (104) for receiving a right image and a left image and means (105) for generating a composite image (C) comprising information about said right image and said left image, **characterized by** comprising means adapted to implement the method according to any one of claims 1 to 12.

22. A device (1100) for reconstructing a pair of images by starting from a composite image, **characterized by** implementing the method according to any one of claims 13 to 20.

23. A stereoscopic video stream (1101) **characterized by** comprising at least one composite image (C) generated by means of the method according to any one of claims 1 to 12.

## Patentansprüche

1. Verfahren zum Erzeugen eines stereoskopischen Videostroms (101), der zusammengesetzte Bilder (C) umfasst, wobei die zusammengesetzten Bilder (C) Informationen über ein rechtes Bild (R) und ein linkes Bild (L) umfassen, wobei
Bildpunkte des rechten Bildes (R) und Bildpunkte des linken Bildes (L) ausgewählt werden, und die ausgewählten Bildpunkte in ein zusammengesetztes Bild (C) des stereoskopischen Videostroms eingesetzt werden, wobei
alle Bildpunkte des rechten Bildes (R) und alle Bildpunkte des linken Bildes (L) in das zusammengesetzte Bild (C) eingesetzt werden, indem eines der zwei Bilder unverändert bleibt und das andere Bild in Regionen (R1, R2, R3) aufgeteilt wird, wobei die Regionen (R1, R2, R3) eine rechteckige Form und mehrere Bildpunkte aufweisen und die Regionen in das zusammengesetzte Bild (C) in die Bereiche des zusammengesetzten Bildes (C) eingesetzt werden, die nicht von dem ungeänderten Bild belegt sind, wobei das Verhältnis zwischen der horizontalen und der vertikalen Auflösung des linken und rechten Bildes unverändert bleibt und das zusammengesetzte Bild (C) ein Einzelbild des stereoskopischen Videostroms ist, das eine Anzahl von Bildpunkten aufweist, die gleich oder größer als die Summe der Bildpunkte des linken und rechten Bildes sind,
**dadurch gekennzeichnet, dass** zum Reduzieren der Erzeugung von Artefakten im Grenzbereich der Regionen aufgrund der Bildkompression die Regionen durch folgende Schritte erhalten werden:
- horizontales Teilen des anderen Bildes (R) in zwei gleichgroße Teile,
- horizontales Teilen eines der zwei gleichgroßen Teile in zwei weitere gleichgroße Teile (R2, R3), wobei der andere Teil (R1) der zwei gleichgroßen Teile nicht weiter geteilt wird.

2. Verfahren nach Anspruch 1, wobei der andere Teil der zwei gleichgroßen Teile des anderen Bildes (R), der nicht weiter geteilt (R1) wird, im zusammengesetzten Bild (C) neben dem ungeänderten Bild (L) platziert wird und wobei die zwei weiteren gleichgroßen Teile (R2, R3) des anderen Bildes (R) im zusammengesetzten Bild (C) unter dem ungeänderten Bild (L) nebeneinander platziert werden.

3. Verfahren nach einem der vorhergehenden Ansprüche, wobei die Regionen (R1, R2, R3) in das zusammengesetzte Bild nur mittels Translationsoperationen eingesetzt werden.

4. Verfahren nach Anspruch 1 oder 2, wobei die Regionen (R1, R2,R3) in das zusammengesetzte Bild (C) mittels Translations- und/oder Rotationsoperationen eingesetzt werden.

5. Verfahren nach einem der vorhergehenden Ansprüche, wobei mindestens ein Teil des Raums im zusammengesetzten Bild frei bleibt und zum Einsetzen eines Signals, das notwendig zum Rekonstruieren des rechten und linken Bildes in einer Demultiplexerstufe ist, verwendet wird.

6. Verfahren nach einem der vorhergehenden Ansprüche, wobei vor dem Einsetzen einer der Regionen in das zusammengesetzte Bild eine Spiegelumkehroperation entlang einer Seite der Region durchgeführt wird.

7. Verfahren nach Anspruch 6, wobei die eine Region in das zusammengesetzte Bild mit einer Seite angrenzend an eine Seite eines anderen Bildes oder einer anderen Region eingesetzt wird, sodass Bildpunkte eines gleichen räumlichen Bereichs nebeneinander angeordnet sind.

8. Verfahren nach einem der vorhergehenden Ansprüche, wobei die Regionen eine rechteckige Form aufweisen.

9. Verfahren nach einem der vorhergehenden Ansprüche, wobei die Regionen zusammenhängende Gruppen von Spalten von Bildpunkten des Bildes umfassen.

10. Verfahren nach einem der vorhergehenden Ansprüche, wobei mindestens zwei der Regionen mindestens eine Bildpunktgruppe gemeinsam haben, wobei die Bildpunktgruppe in einem Grenzbereich zwischen den mindestens zwei Regionen angeordnet ist.

11. Verfahren nach einem der vorhergehenden Ansprüche, wobei mindestens eine der Regionen die in das zusammengesetzte Bild eingesetzt wird, von anderen Regionen des zusammengesetzten Bildes, die vom rechten Bild oder vom linken Bild nachgebildete Bildpunkte aufweisen, separiert wird.

12. Verfahren nach einem der vorhergehenden Ansprüche, wobei eine Sequenz von rechten Bildern und eine Sequenz von linken Bildern empfangen wird,
eine Sequenz von zusammengesetzten Bildern, beginnend mit den Sequenzen des rechten und linken Bildes, generiert wird,
die Sequenz der zusammengesetzten Bilder komprimiert wird.

13. Verfahren zur Rekonstruktion eines Paares von Bildern, ausgehend von einem zusammengesetzten Bild nach einem der vorhergehenden Ansprüche, umfassend die Schritte:
Generieren eines ersten der rechten (R) und linken (L) Bilder durch Nachbilden einer Einzelgruppe zusammenhängender Bildpunkte aus einer Region des zusammengesetzten Bildes,
Generieren eines zweiten Bildes des rechten (R) und linken (L) Bildes durch Nachbilden anderer Gruppen zusammenhängender Bildpunkte aus verschiedenen Regionen (R1, R2, R3) des zusammengesetzten Bildes, wobei eine der verschiedenen Regionen (R1) die gleiche vertikale Größe wie das erste Bild (L) aufweist und die anderen verschiedenen Regionen (R2, R3) übereinander neben der einen der unterschiedlichen Regionen (R1) im zweiten Bild angeordnet werden.

14. Verfahren nach Anspruch 13, wobei die Informationen zum Generieren eines Paars von Bildern aus einem Bereich des zusammengesetzten Bildes extrahiert werden.

15. Verfahren nach Anspruch 14, wobei die Informationen gemäß einem Barcode decodiert sind.

16. Verfahren nach Anspruch 13 oder 15, wobei das Erzeugen des zweiten Bildes mindestens eine Stufe einer Spiegelumkehr einer Gruppe von Bildpunkten von zumindest einer der verschiedenen Regionen umfasst.

17. Verfahren nach einem der Ansprüche 13 bis 16, wobei das Erzeugen des zweiten Bildes mindestens eine Stufe zur Entfernung von Bildpunkten aus mindestens einer der Regionen umfasst.

18. Verfahren nach Anspruch 17, wobei die Bildpunkte aus einem Grenzbereich mindestens einer der Regionen entfernt werden.

19. Verfahren nach einem der Ansprüche 13 bis 18, wobei das zweite Bild nur durch Unterziehen von Translationsoperationen erzeugt wird.

20. Verfahren nach einem der Ansprüche 13 bis 19, wobei das zweite Bild erzeugt wird, indem die Bildpunktregionen Rotations- und/oder Translationsoperationen unterzogen werden.

21. Vorrichtung (100) zum Erzeugen von zusammengesetzten Bildern (C), umfassend Mittel (104) zum Empfangen eines rechten Bildes und eines linken Bildes und Mittel (105) zum Erzeugen eines zusammengesetzten Bildes (C), das Informationen über das rechte Bild und das linke Bild beinhaltet, **gekennzeichnet durch** das Umfassen von Mitteln, die eingerichtet sind, das Verfahren nach einem der Ansprüche 1 bis 12 durchzuführen.

22. Vorrichtung (1100) zum Rekonstruieren eines Paars von Bildern, ausgehend von einem zusammengesetzten Bild, **gekennzeichnet durch** das Durchführen eines Verfahrens nach einem der Ansprüche 13 bis 20.

23. Stereoskopischer Videostrom (1101) **gekennzeichnet durch** das Umfassen mindestens eines zusammengesetzten Bildes (C), das **durch** Mittel der Verfahren nach einem der Ansprüche 1 bis 12 erzeugt wurde.

## Revendications

1. Procédé de génération d'un flux vidéo stéréoscopique (101) comprenant des images composites (C), lesdites images composites (C) comprenant des informations à propos d'une image droite (R) et d'une image gauche (L), dans lequel :
des pixels de ladite image droite (R) et des pixels de ladite image gauche (L) sont sélectionnés, et
lesdits pixels sélectionnés sont intégrés à une image composite (C) dudit flux vidéo stéréoscopique,
tous les pixels de ladite image droite (R) et tous les pixels de ladite image gauche (L) sont intégrés à ladite image composite (C) en laissant l'une desdites deux images inchangées et en séparant l'autre en des régions (R1, R2, R3) ayant une forme rectangulaire et comprenant une pluralité de pixels et en intégrant lesdites régions dans ladite image composite (C) dans des zones de ladite image composite (C) non occupées par ladite image inchangée, le rapport entre des résolutions horizontale et verticale desdites images gauche et droite étant inchangé, ladite image composite (C) étant une trame dudit flux vidéo stéréoscopique ayant un nombre de pixels supérieur ou égal à la somme des pixels desdites images gauche et droite,
le procédé étant **caractérisé en ce que**, afin de réduire, dans la zone frontière desdites régions, la génération d'artéfacts dus à la compression d'image, lesdites régions sont obtenues par l'intermédiaire des étapes de :
- division verticale de ladite autre image (R) en deux portions de taille égale ;
- division horizontale de l'une desdites deux portions de taille égale en deux portions de taille égale supplémentaires (R2, R3), l'autre (R1) desdites deux portions de taille égale n'étant pas divisée davantage.

2. Procédé selon la revendication 1, **caractérisé en ce que** ladite autre des deux portions de taille égale de l'autre image (R) n'étant pas divisée davantage (R1) est intégrée à ladite image composite (C) sur le côté de l'image inchangée (L), et dans lequel lesdites deux portions de taille égale supplémentaires (R2, R3) de l'autre image (R) sont intégrés à ladite image composite (C) sous l'image inchangée (L), sur le côté de l'autre.

3. Procédé selon l'une quelconque des revendications précédentes, **caractérisé en ce que** lesdites régions (R1, R2, R3) sont intégrées à ladite image composite au moyen d'opérations de translation uniquement.

4. Procédé selon la revendication 1 ou 2, **caractérisé en ce que** lesdites régions (R1, R2, R3) sont intégrées à ladite image composite (C) au moyen d'opérations de translation et/ou de rotation.

5. Procédé selon l'une quelconque des revendications précédentes, **caractérisé en ce que** au moins une portion de l'espace resté libre dans l'image composite est utilisée pour intégrer un signal nécessaire pour reconstruire les images gauche et droite au niveau du démultiplexeur.

6. Procédé selon l'une quelconque des revendications précédentes, **caractérisé en ce que**, avant d'intégrer l'une desdites régions à ladite image composite, une opération d'inversion spéculaire est réalisée le long d'un côté de ladite une région.

7. Procédé selon la revendication 6, **caractérisé en ce que** ladite une région est intégrée à ladite image composite avec un côté bordant un côté d'une autre image ou région, de sorte que des pixels relatifs à une même zone spatiale sont agencés côte à côte.

8. Procédé selon l'une quelconque des revendications précédentes, **caractérisé en ce que** lesdites régions ont une forme rectangulaire.

9. Procédé selon l'une quelconque des revendications précédentes, **caractérisé en ce que** lesdites régions comprennent des groupes contigus de colonnes de pixels de ladite image.

10. Procédé selon l'une quelconque des revendications précédentes, **caractérisé en ce que** au moins deux desdites régions ont au moins un groupe de pixels en commun, ledit groupe de pixels étant agencé dans une zone frontière entre lesdites deux desdites régions.

11. Procédé selon l'une quelconque des revendications précédentes, **caractérisé en ce que** au moins l'une desdites régions qui est intégrée à ladite image composite est séparée d'autres régions de l'image composite qui comprennent des pixels copiés à partir de ladite image droite ou de ladite image gauche.

12. Procédé selon l'une quelconque des revendications précédentes, **caractérisé en ce que** :
une séquence d'images droites et une séquence d'images gauches sont intégrée,
une séquence d'images composites est générée en commençant par lesdites séquences d'images gauches et droites,
ladite séquence d'images composites est compressée.

13. Procédé de reconstruction d'une paire d'images en commençant par une image composite selon l'une quelconque des revendications précédentes, comprenant les étapes de :
- génération d'une première desdites images droite (R) et gauche (L) en copiant un seul groupe de pixels contigus à partir d'une région de ladite image composite,
- génération d'une seconde image desdites images droite (R) et gauche (L) en copiant d'autres groupes de pixels contigus à partir de régions différentes (R1, R2, R3) de ladite image composite, dont l'une desdites différentes régions (R1) a la même taille verticale que ladite première image (L) et les autres desdites régions (R2, R3) sont placées l'une sur l'autre à côté de ladite une desdites différentes régions (R1) de ladite seconde image.

14. Procédé selon la revendication 13, **caractérisé en ce que** les informations de génération de ladite paire d'images sont extraites d'une zone de ladite image composite.

15. Procédé selon la revendication 14, **caractérisé en ce que** lesdites informations sont encodées selon un code-barres.

16. Procédé selon la revendication 13 ou 15, **caractérisé en ce que** la génération de ladite seconde image comprend au moins une phase d'inversion spéculaire d'un groupe de pixels d'au moins l'une desdites régions différentes.

17. Procédé selon l'une quelconque des revendications 13 à 16, **caractérisé en ce que** la génération de ladite seconde image comprend au moins une phase d'élimination des pixels d'au moins une desdites régions.

18. Procédé selon la revendication 17, **caractérisé en ce que** les pixels sont éliminés d'une zone frontière de ladite au moins une région.

19. Procédé selon l'une quelconque des revendications 13 à 18, **caractérisé en ce que** ladite seconde image est générée en soumettant lesdites régions de pixels à des opérations de translation uniquement.

20. Procédé selon l'une quelconque des revendications 13 à 19, **caractérisé en ce que** ladite seconde image est générée en soumettant lesdites régions de pixels à des opérations de rotation et/ou de translation.

21. Dispositif (100) de génération d'images composites (C), comprenant un moyen (104) permettant de recevoir une image droite et une image gauche et un moyen (105) permettant de générer une image composite (C) comprenant des informations à propos de ladite image droite et de ladite image gauche, **caractérisé en ce qu'**il comprend un moyen adapté pour mettre en oeuvre le procédé selon l'une quelconque des revendications 1 à 12.

22. Dispositif (1100) de reconstruction d'une paire d'images en commençant par une image composite, **caractérisé par** la mise en oeuvre du procédé selon l'une quelconque des revendications 13 à 20.

23. Flux vidéo stéréoscopique (1101) **caractérisé en ce qu'**il comprend au moins une image composite (C) générée au moyen du procédé selon l'une quelconque des revendications 1 à 12.
